# DEMANDE DE BREVET EUROPEEN

(11) **EP 1 545 085 A1**
(43) Date de publication de la demande: **22.06.2005**
(21) Numéro de dépôt: 03293246.9
(22) Date de dépôt: 19.12.2003
(51) Int. Cl.: H04L 29/06

(54) **Procédé et système de gestion d'une session de transmission de données en flux continu et en temps réel**

(71) Demandeur: FRANCE TELECOM, 75015 Paris (FR)
(72) Inventeur: Pichelin, Aude, 75015 Paris (FR); Nguyen, Kim-Ahn-Vu, 92260 Fontenay-aux-Roses (FR)
(74) Mandataire: Remy, Vincent Noel Paul

(57) **Abrégé**

Un procédé de gestion d'une session de transmission de données en flux continu d'un serveur de données en flux continu (en anglais, « streaming ») vers au moins un terminal, selon un premier protocole de signalisation et au travers d'un premier réseau auquel est connecté le terminal et un deuxième réseau auquel est connecté le serveur,
une communication étant établie entre deux terminaux via lesdits premier et second réseaux, sur la base d'un second protocole de signalisation.

Les premier et second protocoles de signalisation sont identiques et ladite session de transmission de données en flux continu est établie selon ledit protocole entre le serveur de données et le terminal, avec une négociation de paramètres définissant des conditions de transmission des données en flux continu.

## Description

La présente invention est relative au domaine des télécommunications et, plus précisément, au domaine des télécommunications dans les services de transmission de données en flux continu et en temps réel. Cette transmission est habituellement désignée par le terme anglais *« streaming* ».

Pour la transmission entre deux dispositifs de données multimedia correspondant par exemple à une bande sonore ou encore à une bande video, plusieurs techniques sont possibles. Une bande (son ou video) peut être envoyée sous la forme d'un fichier de données, qui sera chargé sur le dispositif destinataire, avant d'être lu en local. En streaming, la bande est plutôt envoyée en temps réel sous la forme d'un flux continu de données depuis le dispositif émetteur vers le dispositif destinataire. Ce deuxième type de transmission présente l'avantage pour un utilisateur de ne pas avoir à attendre de charger un important fichier avant de pouvoir regarder un film ou écouter une bande son, contrairement au deuxième type de transmission.

La présente invention est relative à ce deuxième type de transmission de données, notamment multimedia. En effet, le média est envoyé en flot continu et il est diffusé dès son arrivée sur le dispositif destinataire. Afin de pouvoir traiter les données en flux continu, l'utilisateur a besoin d'un « lecteur » (ou « player » en anglais) se présentant sous la forme d'une application logicielle dédiée qui décompresse le signal et envoie les données de video sur l'écran et les données de son sur les hauts parleurs. Le média concerné peut être à émission individuelle (dite "unicast") ou à multidiffusion (dite "multicast").

La transmission de données en flux continu permet d'offrir un service que l'on peut définir comme un service de base de données hôte virtuelle. Ce service, basé sur l'utilisation d'un serveur de données en flux continu, permet à l'utilisateur d'activer une session de transmission de données en flux continu afin d'accéder à la base de données virtuelle pour récupérer des données.

On décrit ci-après les principes de base d'une session de transmission de données en flux continu en s'appuyant sur l'exemple d'un serveur de données en flux continu offrant le service d'un « magnétoscope virtuel ». Ce service est pris à titre d'exemple représentatif pour ce qui suit. Lorsqu'un utilisateur souhaite voir un film sur son terminal, il s'adresse au serveur de données en flux continu pour en faire la requête. La vitesse de transmission du film depuis le serveur vers le terminal du client est en général adaptable aux capacités du terminal de l'utilisateur et vice-versa. Généralement, le terminal client maintient une zone mémoire utilisée pour stocker les données en provenance du serveur. Le terminal récupère les données depuis cette zone mémoire à une vitesse constante. La zone mémoire étant de taille constante, la vitesse de transmission est adaptée en fonction de l'occupation de cette zone afin d'éviter la saturation de cette zone. De plus, un tel service exige que les données soient transmises en flot continu et lues par le terminal en temps réel. De ce fait, de manière préférable, les ressources de transmissions seront réservées à l'avance. Dans la suite de la description, le terme « ressource » représentera les ressources de transmission.

Compte tenu de ce qui précède, il apparaît clairement qu'une session de transmission de données en flux continu est une session de transmission de données multimedia qui requiert des conditions plus particulières entre le serveur et le client que d'autres sessions de transmission non continue de données, notamment sur un réseau de type Internet, telles que les appels téléphoniques, les conférences ou encore les notifications d'événements. En effet, ces dernières sessions sont moins exigeantes quant aux ressources de transmission allouées, alors que les sessions de streaming requièrent un flot continu de transmission de données.

L'organisme IETF (pour "Internet Engineering Task Force") a créé une norme de gestion de transmission de communication de données en flux continu et en temps réel, dite "Real Time Streaming Protocol" (RTSP), spécifiquement pour répondre aux besoins d'une transmission efficace exigés par les communications de streaming. Le RTSP est un protocole d'établissement et de contrôle de transmission de données multimedia basé sur le principe client-serveur. Ce protocole permet l'établissement d'une transmission de données en flux continu et en temps réel à diffusion individuelle aussi bien qu'à large diffusion. Cette norme définit des messages spécifiques dans un document RFC 2326 (pour "Request For Comment") de l'IETF.

Dans des réseaux mobiles de type UMTS (pour "Universal Mobile Telecommunication System"), le service de streaming s'avère particulièrement avantageux pour un opérateur ainsi que pour un client, dans des applications futures. La gestion d'une session de streaming est actuellement normalisée par l'organisme 3GPP (pour "Third Generation Partnership Project") en ce qui concerne l'UMTS en version 4, et en voie de normalisation pour ce qui concerne la version 6.

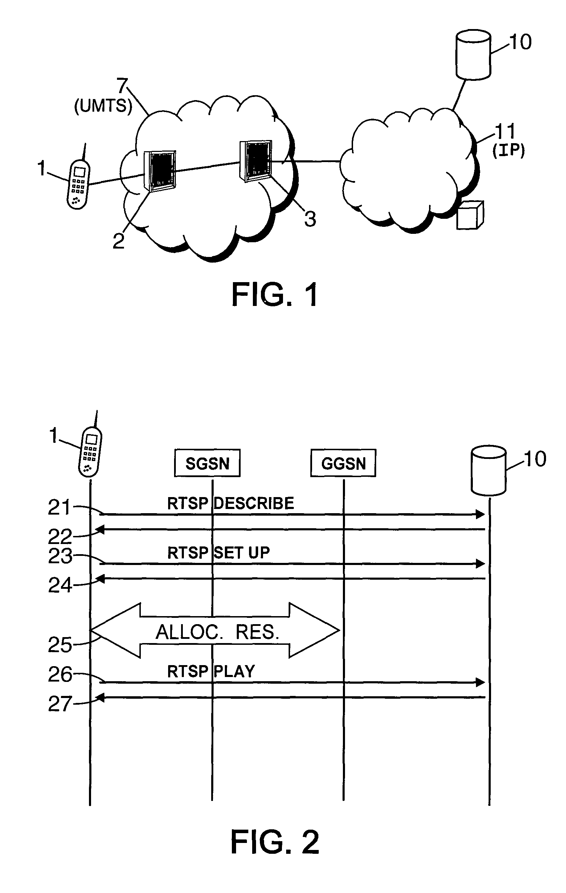

On décrit ci-après de telles versions 4 et 6 de l'UMTS en référence aux figures 1, 2 et 3.

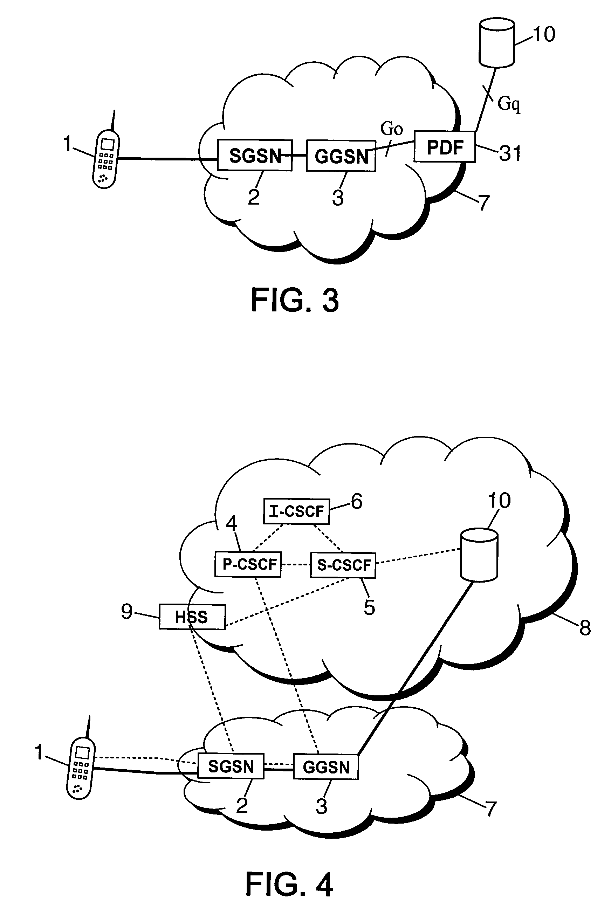

Les versions 4 et 6 de l'UMTS normalisent la gestion d'une session de transmission du second type de transmission (flux continu de données). L'architecture utilisée pour la gestion d'une session de transmission de données en flux continu et en temps réel, en UMTS versions 4 et 6, est représentée en figure 1. L'architecture de la figure 1 comprend le réseau 11 qui est un réseau de type Internet quelconque. En UMTS version 4, l'établissement de session de transmission de données en flux continu utilise le protocole RTSP. La figure 2 illustre un tel établissement. Le terminal 1 envoie tout d'abord un message RTSP 'DESCRIBE' 21 à un serveur de données en flux continu 10 au travers du réseau UMTS 7 et du réseau Internet 11 et reçoit du serveur de données en flux continu 10 un message 22 en réponse. Ce premier échange de messages permet au terminal d'obtenir du serveur de données en flux continu 10 la description des média qui seront transmis pendant la session de transmission de données en flux continu qui est en cours d'établissement. Cette description est faite à l'aide du protocole SDP (pour "Session Description Protocol"), pour la gestion d'une session du premier type de transmission, et indique le type et le format des média à transmettre pendant la session, ainsi que le protocole de transport utilisé pour la transmission des données. Un deuxième échange de messages RTSP, dans lequel le terminal envoie un RTSP 'SET UP' message 23 au serveur de données en flux continu et reçoit un message 24 en réponse, permet au terminal 1 de demander au serveur de données en flux continu 10 l'allocation de ressources dans le serveur, correspondantes à la session de transmission de données en flux continu en cours d'établissement, et de spécifier les ports sur lesquels le terminal va recevoir les données en flux continu. Ensuite, le terminal 1 réserve des ressources dans le réseau UMTS 7 via un échange de messages 25 avec un équipement GGSN (Gateway GPRS Support Node) du réseau UMTS portant la référence 3. Puis enfin un quatrième échange de messages RTSP, dans lequel le terminal envoie un message RTSP 'PLAY' 26 et reçoit du serveur de données en flux continu un message 27 en réponse, permet au terminal 1 de demander puis de recevoir les données en flux continu. Une fois que l'envoi des données en flux continu a débuté, le mobile peut demander l'arrêt momentané de cet envoi, et ce, en utilisant le message RTSP 'PAUSE'. L'envoie des données de streaming peut être repris par l'envoi d'un message RTSP 'PLAY' au serveur de données en flux continu 10. De plus, la session de transmission de données en flux continu peut être définitivement arrêter par l'envoie d'un message RTSP 'TEARDOWN' au serveur de données en flux continu. L'UMTS version 4 normalise donc un établissement de session de transmission de données en flux continu mais ce dernier s'effectue sans contrôle des ressources utilisées. Afin de pallier cet inconvénient, l'UMTS version 6 normalise un établissement de session de transmission de données en flux continu avec un contrôle des ressources dont l'architecture est illustrée en Figure 3. Cette architecture comprend un réseau UMTS incluant en outre une fonction de contrôle 31, de type PDF (pour "Policy Decision Function"). Cet établissement de session de transmission de données en flux continu est, tout comme en version 4, basé sur le protocole RTSP. Les mêmes échanges de messages RTSP qu'en version 4 sont effectués entre le terminal 1 et le serveur de données en flux continu 10. Toutefois, en version 6, le serveur de données en flux continu communique avec la fonction de contrôle PDF 31 afin d'autoriser les ressources négociées entre le terminal 1 et le serveur de données en flux continu 10. Une fois que les ressources sont autorisées par la fonction de contrôle PDF 31, le terminal peut demander la réservation des ressources dans le réseau UMTS 7. En UMTS version 6, cette fonction PDF peut être intégrée dans un équipement seul, et de ce fait une interface entre la fonction PDF et le serveur de données en flux continu est à définir pour le service de communication de données en flux continu et en temps réel (interface Gq). Au cours de la réservation des ressources dans le réseau UMTS 7, le équipement GGSN 3 communique avec la fonction de contrôle PDF pour vérifier que les ressources demandées par le terminal lors de la réservation de ressources n'excèdent pas celles qui ont été auparavant autorisées par la fonction PDF 31. Comme en UMTS version 4, une session de transmission de données en flux continu établie peut être arrêtée momentanément avec l'envoi d'un message RTSP 'PAUSE' au serveur de données en flux continu 10. Le terminal peut également reprendre la session de transmission de données en flux continu par l'envoi d'un message RTSP 'PLAY ' au serveur de données en flux continu 10. Une session de transmission de données en flux continu peut aussi être définitivement arrêtée par le terminal avec l'envoie d'un message RTSP 'TEARDOWN' au serveur de données en flux continu.

On décrit brièvement ci-après l'UMTS en version 5. Cette version 5, qui introduit l'IMS (pour "Internet Protocol Multimedia Subsystem"), présente une architecture très avantageuse, destinée à permettre un établissement dynamique et un contrôle de sessions multimedia entre deux dispositifs, typiquement deux terminaux, utilisant le réseau de commutation de paquet de l'UMTS comme réseau de transport, comme illustré sur la figure 4 qui sera décrite en détail plus loin.

Une grande évolution apportée à cette architecture vient de la corrélation entre le domaine de commutation de paquet du réseau UMTS, portant la référence 7 sur la figure 4, en ce qui concerne le transport des données, et le réseau, portant la référence 8, basé sur un protocole de type IP (pour "Internet Protocol") avec des mécanisme de contrôle de session en ce qui concerne le contrôle du transport.

Toutefois, l'UMTS version 5 ne normalise pas la gestion d'un service de streaming. Les mécanismes d'établissement de session de transmission de données en flux continu normalisés en UMTS version 4 restent bien sûr applicables en UMTS version 5, mais ne bénéficient pas de l'architecture IMS et surtout s'effectuent sans contrôle des ressources.

Par ailleurs, un premier inconvénient de la normalisation de la gestion d'une session de streaming en UMTS est que seule la version 6, qui n'est pas encore aboutie, bénéficie d'un contrôle des ressources au cours de l'établissement. En effet, l'UMTS version 4 normalise la gestion d'une telle session mais sans contrôle des ressources.

Un autre inconvénient de la normalisation de l'UMTS version 6 en ce qui concerne la gestion d'une session de transmission de données en flux continu réside dans le fait que nombreux sont les aspects qui restent à normaliser, principalement à propos de la qualité de service et du contexte PDP (pour "Packet Data Protocol") utilisé pour transporter les messages RTSP.

Un autre inconvénient de cette normalisation des versions 4 et 6 est qu'elle est basée sur le protocole RTSP. Ce protocole n'étant pas par ailleurs utilisé dans les réseaux UMTS, cette normalisation implique que les terminaux du réseau UMTS supportent ce protocole en version 4 et en version 6. Si le service de streaming est offert pour la version 5, alors les mécanismes d'établissement d'une session de transmission de données en flux continu seront utilisés, et par conséquent les terminaux de la version 5 auront à supporter ce protocole. L'architecture d'un terminal UMTS est de ce fait considérablement complexifiée compte tenu de sa faible puissance de calcul et de son espace de mémoire limité. De plus, partant du fait que le protocole RTSP ne sera utilisé que pour le service de gestion d'une session de streaming, il est possible que les constructeurs de terminaux UMTS ne soient pas disposés à implémenter ce protocole pour le moment.

On indique subsidiairement que les messages RTSP échangés durant l'établissement d'une session de transmission de données en flux continu sont susceptibles d'être facturés en UMTS version 6, tout comme ils le sont en UMTS version 4. En effet, le protocole RTSP n'est pas transmis dans un contexte PDP de signalisation pour l'instant comme un protocole de signalisation dans le réseau UMTS. Cette facturation des messages RTSP d'établissement de session ne correspond pas forcément à la logique de service d'un opérateur.

La présente invention vient améliorer la situation.

Elle propose à cet effet un procédé de gestion d'une session de transmission de données en flux continu d'un serveur de données en flux continu vers au moins un terminal, selon un premier protocole de signalisation et au travers d'un premier réseau auquel est connecté le terminal et un deuxième réseau auquel est connecté le serveur, l'un des premier et second réseaux étant un réseau de télécommunication sans fil, une communication étant établie entre deux terminaux via lesdits premier et second réseaux, sur la base d'un second protocole de signalisation.

Selon un aspect de l'invention, lesdits premier et second protocoles de signalisation sont identiques et ladite session de transmission de données en flux continu est établie selon ledit protocole entre le serveur de données et le terminal, avec une négociation de paramètres définissant des conditions de transmission desdites données en flux continu.

De façon avantageuse, le premier et/ou le second réseau comportent un module de contrôle des ressources du premier réseau, ce module de contrôle étant agencé pour effectuer un calcul de ressources de transmission autorisées pour la session de transmission de données en flux continu, en cours d'établissement, sur la base de paramètres négociés entre le terminal et le serveur.

De préférence, pour établir ladite session, on prévoit les étapes suivantes :
a) le terminal envoie au serveur un message comportant des paramètres demandés pour les conditions de transmission des données en flux continu,
b) le serveur répond au terminal, via le module de contrôle, par un message comportant des paramètres négociés et définissant des conditions de transmission des données en flux continu, en fonction des paramètres demandés et des capacités du serveur,
c) le terminal accepte des paramètres négociés en transmettant un message au serveur, via le module de contrôle,
d) et le terminal échange des messages avec ledit module de contrôle pour réserver des ressources du premier réseau définissant au moins un débit de transmission desdites données en flux continu,
avant le début de la transmission desdites données.

La présente invention peut être mise en oeuvre dans un système incluant les premier et deuxième réseaux précités, ainsi que le terminal, d'une part, et le serveur, d'autre part. A ce titre, la présente invention vise aussi un tel système dans lequel, pour établir ladite session :
a) le terminal envoie au serveur un message comportant des paramètres demandés pour les conditions de transmission des données en flux continu,
b) le serveur répond au terminal, via le module de contrôle, par un message comportant des paramètres négociés et définissant des conditions de transmission des données en flux continu, en fonction des paramètres demandés et des capacités du serveur,
c) le terminal accepte des paramètres négociés en transmettant un message au serveur, via le module de contrôle,
d) et le terminal échange des messages avec ledit module de contrôle pour réserver des ressources du premier réseau définissant au moins un débit de transmission desdites données en flux continu,
avant le début de la transmission desdites données.

Grâce à ces dispositions, un réseau UMTS peut offrir un service de transmission de données en flux continu dès la version 5 et ce à un coût moindre que ne peuvent le faire les versions 4 et 6. En effet, dans un mode de réalisation préféré de l'invention, un tel service est établi sur la base du protocole SIP (pour "Session Initiation Protocol") déjà par ailleurs utilisé dans le domaine UMTS pour la version 5, avec une architecture bien avantageuse en termes de contrôle des ressources, par rapport à la version 4.

En outre, le protocole RTSP n'est plus nécessaire. Par conséquent, une implémentation d'un mode de réalisation de l'invention est plus simple et beaucoup moins coûteuse.

D'autres aspects, buts et avantages de l'invention apparaîtront à la lecture de la description d'un de ses modes de réalisation.

L'invention sera également mieux comprise à l'aide des dessins, sur lesquels :
- les figures 1 à 3, déjà commentées ci-dessus illustrent l'art antérieur ;
- la figure 4 est un schéma de l'architecture du réseau selon un mode de réalisation de l'invention ;
- la figure 5 est une représentation de l'échange de messages entre les différents éléments du réseau pour la gestion d'une session de transmission de données en flux continu et en temps réel selon un mode de réalisation de l'invention.

Sur les différentes figures, les mêmes références désignent des éléments identiques ou similaires.

On se réfère tout d'abord à la figure 4 pour décrire une architecture pour des applications de streaming au sens de la présente invention. Dans un mode préféré de l'invention, l'architecture de l'invention est basée sur l'architecture d'un réseau IP multimedia de type IMS normalisée pour l'UMTS version 5. Le coeur de l'architecture IP pour l'UMTS en version 5, dite IMS (pour "Internet Protocol Multimedia Subsystem") est composé d'équipements CSCF (pour "Call State Control Functions") référencés 4, 5 et 6 qui permettent de contrôler les sessions multimedia dans le réseau de type IMS et interagissent avec d'autres entités du réseau de type IMS tels que des serveurs d'application. On distingue plusieurs types d'équipements CSCFs dans l'architecture de réseau de type IMS :
- les modules P-CSCFs (pour "Proxy-CSCFs"), portant la référence 4, qui sont les premiers points de contacts pour les terminaux dans l'IMS ; ces entités comprennent une fonction de contrôle des ressources de type PDF,
- les modules S-CSCFs (pour "Serving-CSCFs"), portant la référence 5, qui contrôlent les sessions d'un terminal pendant toute la période où ce dernier est enregistré dans l'IMS ;et
- les modules I-CSCFs (pour "Interrogating-CSCFs"), portant la référence 6, qui sont des points d'entrée pour un tel réseau 8 pour des sessions multimedia entre un utilisateur de ce réseau et un utilisateur appartenant à un autre réseau du même type.

L'élément de réseau 9, désigné par HSS (pour "Home Subscriber Server") est introduit dans l'UMTS Version 5, en tant que HLR (pour "Home Location Register") contenant en outre des fonctions relatives au domaine IP multimedia. En d'autre terme, l'élément de réseau HSS contient aussi la base de données des abonnés d'un domaine IP multimedia. Les S-CSCFs 5 ont une interface avec les éléments de réseau HSS 9.

Le protocole utilisé pour contrôler les sessions multimedia est le protocole SIP (pour « Session Initiation Protocol »). Ce protocole est utilisé par les terminaux 1, les équipements de type CSCFs (portant les références 4, 5 et 6) et les Serveurs d'application. Une session SIP permet d'établir des sessions de transport de paquets pour des services multimedia. Les noeuds du domaine IP multimedia 8 et du domaine de commutation de paquets UMTS 7 sont liés de telle façon qu'il existe une corrélation entre la couche de transport qui fournit les ressources et la couche d'application qui contrôle les ressources fournies aux utilisateurs par la couche de transport. De ce fait, l'architecture d'un réseau IP multimedia de type IMS offre un contrôle des ressources. En effet une correspondance est faite entre les ressources négociées pendant la phase d'établissement d'une session de transmission de données en flux continu via le protocole SIP et les ressources utilisées au niveau transport dans le domaine de commutation de paquet du réseau UMTS. De ce fait la fonction PDF incluse dans les modules P-CSCFs communique avec les équipements GGSN 3 du réseau de commutation de paquet UMTS portant la référence 7, et plus particulièrement avec une entité PEP (pour « Policy Enforcement Point ») incluse dans les équipements GGSN 3. Une interface appelée Go a donc également été définie en UMTS version 5 pour permettre un échange d'information entre l'entité PEP et la fonction de contrôle PDF et apporter un meilleur contrôle des ressources utilisées au niveau transport dans le réseau UMTS 7, comme cela est décrit dans la section ci-dessous. L'UMTS Version 5 normalise l'établissement d'une session du premier type de transmission dans une telle architecture, notamment entre un terminal 1 du réseau UMTS 7, enregistré dans le réseau IP multimedia de type IMS portant la référence 8, et un autre terminal ou un serveur d'application enregistré dans un réseau IP.

Selon un mode de réalisation de l'invention, un serveur de streaming portant la référence 10 est introduit dans le réseau IP référencé 8. Selon un mode préféré de la présente invention, une telle architecture comprend un module de contrôle qui inclut un organe de contrôle dans le réseau UMTS référencé 7 et un organe de contrôle dans le réseau IP référencé 8. De préférence, l'organe de contrôle dans le réseau IP est la fonction de contrôle PDF décrite ci-dessus. La fonction PDF est incluse dans l'élément de réseau P-CSCF 4. L'autre organe de contrôle est de préférence inclus dans l'élément de réseau GGSN et est l'entité PEP. Bien sur, l'invention couvre toute autre configuration où cet organe de contrôle serait inclus dans tout autre élément de réseau.

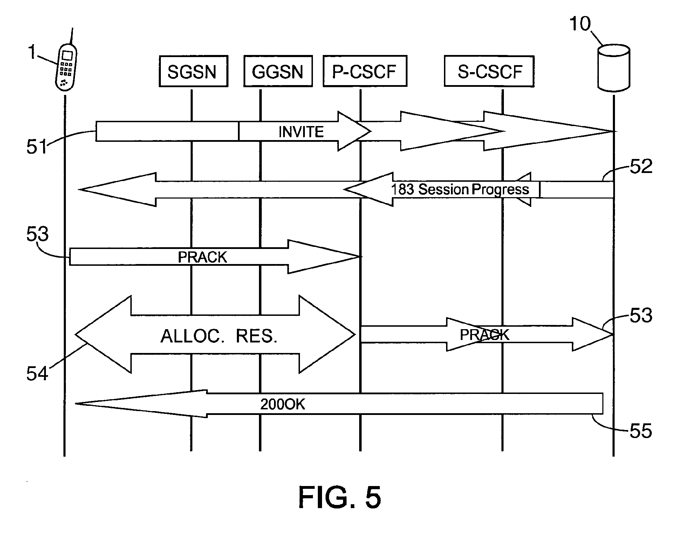

La figure 5 détaille les échanges de messages selon un mode de réalisation de l'invention entre les différentes entités du réseau UMTS et du réseau Internet. Un terminal 1, qui est un abonné du réseau UMTS de commutation de paquets 7 et de l'IMS, active un contexte PDP de signalisation afin de pouvoir s'enregistrer dans le réseau Internet 8. Cette procédure, bien connue de l'homme du métier, ne sera pas décrite dans cette description. La description prend comme hypothèse que le terminal 1 est déjà enregistré au réseau 8. Le terminal est donc autorisé à établir une session de transmission de données en flux continu avec le serveur de données en flux continu 10. Pour ce faire, le terminal initie l'établissement d'une telle session par l'envoi d'un message 'INVITE' 51 selon le protocole SIP à l'élément de réseau SGSN 2. L'élément de réseau SGSN transmet ce message à l'élément de réseau GGSN 3, qui le transmet à l'élément de réseau P-CSCF. Ce dernier élément transmet ce message à l'élément de réseau S-CSCF qui le transmet enfin au destinataire final le serveur 10. Ce message 51 comprend des paramètres définissant certains aspects de la session en cours d'établissement. Les paramètres peuvent indiquer le type de média qui va être transmis au cours de cette session (par exemple video, audio ou autre). Ils peuvent également indiquer les ports sur lesquels le terminal souhaite recevoir les données en flux continu ainsi que les codeurs-décodeurs qui seront utilisés, ces derniers pouvant être choisis par type de média ou encore d'autres paramètres caractérisant la session. Dans un mode préféré de l'invention, ces paramètres seront transmis dans le message SIP 'INVITE' 51 selon le protocole SDP. Ainsi la partie SDP du message 51 comprend les mêmes informations que la partie SDP du message RTSP 'DESCRIBE' utilisé en UMTS version 4 et 6 comme cela a été décrit ci-dessus.

Lorsque le serveur 10 reçoit ce message 'INVITE', il compare les paramètres demandés par le terminal et les capacités qu'il peut offrir au terminal. De cette comparaison le serveur en déduit des paramètres négociés qu'il envoie au terminal dans un message '183 Session Progress' 52 selon le protocole SIP en réponse au message 51. Ce message 52 est transmis au terminal 1 via les éléments de réseau successifs S-CSCF, P-CSCF, GGSN et enfin SGSN. Ce message est ainsi équivalent au message en réponse du RTSP 'DESCRIBE' message utilisé en UMTS version 4 et 6.

Le terminal 1 envoie un message SIP 'PRACK' 53 en réponse au message SIP '183 Session Progress'. Ce message 53 comprend les paramètres communs au serveur et au terminal. Ce message est l'équivalent du message RTSP 'SET UP' utilisé en version 4 et 6 et décrit précédemment.

Le terminal 1 demande ensuite à l'élément de réseau GGSN 3, la réservation des ressources de transmission requises pour la session en cours d'établissement pour le transport des données en flux continu au sein du réseau UMTS de commutation de paquet.

Enfin sur réception du message SIP 'PRACK' 53, la session de transmission de données en flux continu est établie et le serveur 10 commence à envoyer les données requises par le terminal 1 en respectant les paramètres définissant la session envoyés dans ce message 'PRACK'. La session débute avec l'envoi d'un message SIP '200 OK' par le serveur 10 au terminal 1. Ce message est équivalent à la réponse du serveur au message RTSP 'PLAY' utilisé en version 4 et de l'UMTS comme cela a été décrit précédemment.

Dans un mode de réalisation préférée de l'invention, l'organe de contrôle PDF inclus dans l'élément de réseau P-CSCF contrôle les ressources de transmission qui seront utilisées pendant la session établie de communication de données en flux continu. Ainsi, pendant l'établissement de la session, et plus précisément à la réception du message '183 Session Progress' 52, l'organe de contrôle calcule les ressources autorisées dans le réseau IP 8 pour la session en cours d'établissement sur la base des paramètres négociés entre le terminal et le serveur, paramètres définissant cette session et inclus dans ce message 52.

Selon un mode préféré de l'invention l'organe de contrôle prévu dans le réseau de transport UMTS a une interface avec l'organe de contrôle PDF du réseau IP référencé 8 qui permet l'échange d'information concernant les ressources autorisées. L'organe de contrôle prévu dans le réseau de transport UMTS peut être intégrée à l'élément de réseau GGSN 3, comme décrit précédemment. Lorsque le terminal 1 demande la réservation de ressources dans le domaine UMTS de commutation de paquet 7, des messages sont échangés entre l'organe de contrôle PDF et l'organe de contrôle du réseau UMTS, portant la référence 54. Ainsi l'organe de contrôle du réseau UMTS accepte ou non la réservation des ressources demandées par le terminal 1 selon les ressources autorisées et calculées préalablement par le PDF.

Une fois que la session de transmission de données en flux continu est établie, le domaine UMTS de commutation de paquet n'acceptera pas de transporter pendant la session de transmission de données en flux continu des média qui n'auraient pas été négociés pendant l'établissement de la session. Ce contrôle peut être effectué par l'organe de contrôle du réseau UMTS. Ce contrôle est un des avantages importants apportés par un mode de réalisation de l'invention.

Un mode de réalisation de l'invention offre la possibilité au terminal 1 d'arrêter momentanément et de reprendre ou encore d'arrêter définitivement une session établie. Le terminal envoie un message 'UPDATE - hold' selon le protocole SIP au serveur 10 afin d'arrêter momentanément l'envoi de données en flux continu. Ce message est l'équivalent du message RTSP 'PAUSE'. Pour reprendre l'envoie de données, le terminal envoie au serveur 10 un message 'UPDATE - Resume' selon le protocole SIP. Ce message est l'équivalent du message RTSP 'PLAY'. Le terminal peut également arrêter définitivement la session de transmission de données en flux continu par l'envoi d'un message 'BYE' selon le protocole SIP. Ce message est l'équivalent du message RTSP 'TEARDOWN'.

On comprendra aussi que l'invention permet que les messages échangés pour la gestion d'une session de transmission de données en flot continu ne soient pas facturés par l'opérateur, étant donné que les messages SIP sont transmis dans un contexte PDP de signalisation.

## Revendications

1. Procédé de gestion d'une session de transmission de données en flux continu d'un serveur de données en flux continu (10) vers au moins un terminal (1), selon un premier protocole de signalisation et au travers d'un premier réseau auquel est connecté le terminal et un deuxième réseau auquel est connecté le serveur (10), l'un des premier et second réseaux étant un réseau de télécommunication sans fil,
une communication étant établie entre deux terminaux via lesdits premier et second réseaux, sur la base d'un second protocole de signalisation,
**caractérisé en ce que** les premier et second protocoles sont identiques, et **en ce que** ladite session de transmission de données en flux continu est établie selon ledit protocole de signalisation entre le serveur de données et le terminal, avec une négociation de paramètres définissant des conditions de transmission desdites données en flux continu.

2. Procédé selon la revendication 1, **caractérisé en ce que** le premier et/ou le second réseau comportent un module de contrôle des ressources du premier réseau, et **en ce que** ledit module de contrôle est agencé pour effectuer un calcul de ressources de transmission autorisées pour la session de transmission de données en flux continu, en cours d'établissement, sur la base de paramètres négociés entre le terminal et le serveur.

3. Procédé selon la revendication 2, **caractérisé en ce qu'**il comporte les étapes suivantes, pour établir ladite session :
a) le terminal envoie au serveur (10) un message comportant des paramètres demandés pour les conditions de transmission des données en flux continu ;
b) le serveur répond au terminal, via le module de contrôle, par un message comportant des paramètres, définissant des conditions de transmission des données en flux continu, négociés sur la base des paramètres demandés et des capacités du serveur ;
c) le terminal accepte des paramètres négociés en transmettant un message au serveur, via le module de contrôle ;
d) et le terminal échange des messages avec ledit module de contrôle pour réserver des ressources du premier réseau définissant au moins un débit de transmission desdites données en flux continu,
avant le début de la transmission desdites données.

4. Procédé selon la revendication 3, dans lequel ledit protocole de signalisation est le protocole "Session Initiation Protocol" (SIP), **caractérisé en ce qu'**il comporte les étapes suivantes:
a) transmission du terminal (1) vers le serveur de données en flux continu (10) d'un message 'INVITE' (51) selon le protocole SIP;
b) transmission du serveur de données en flux continu vers le terminal d'un message '183 Session Progress' (52) selon le protocole SIP;
c) transmission du terminal (1) vers le serveur de données en flux continu (10) d'un message 'PRACK' (53) selon le protocole SIP, pour confirmer les paramètres négociés ;
d) le terminal (1) réserve dans le premier réseau des ressources de transmission (54) pour la session en cours d'établissement ;
e) transmission du serveur de données en flux continu vers le terminal d'un message (55) qui indique la fin de l'établissement de la session de transmission de données en flux continu et le début de la session de transmission de données en flux continu.

5. Procédé selon la revendication 4, **caractérisé en ce que** les paramètres de la session de transmission de données en flux continu sont échangés entre le terminal (1) et le serveur (10) dans un protocole de type "Session Description Protocol" (SDP).

6. Procédé selon l'une des revendications 3 à 5, dans lequel le module de contrôle comprend un premier organe de contrôle dans le premier réseau et un deuxième organe de contrôle dans le deuxième réseau,
**caractérisé en ce que** l'étape (d) est exécutée sous le contrôle du deuxième organe via le premier organe,
et **en ce que** le procédé comporte les étapes suivantes :
- le terminal envoie une requête de réservation de ressources pour réserver les ressources utiles pour la transmission dans le premier réseau ;
- ladite requête est transmise au premier organe de contrôle ;
- le premier organe de contrôle interroge le deuxième organe pour comparer les ressources autorisées et les ressources à réserver demandées par le terminal;
- sur la base de ladite comparaison, ladite requête est soumise à une
autorisation du premier organe de contrôle.

7. Procédé selon la revendication 6, dans lequel on prévoit :
- dans le premier réseau, un premier élément de réseau (2) utilisé au moins comme point d'accès pour le terminal et un deuxième élément de réseau (3) utilisé en tant que passerelle avec le deuxième réseau,
- dans le second réseau, un troisième élément de réseau (4) utilisé en tant que passerelle avec le premier réseau et relié au serveur (10),
**caractérisé en ce que** le deuxième élément de réseau (3) comporte
le premier organe de contrôle,
et **en ce que** le troisième élément de réseau (4) comporte le deuxième organe de contrôle.

8. Procédé selon la revendication 7, dans lequel on prévoit en outre un quatrième élément de réseau, en tant que point d'accès pour le serveur dans ledit deuxième réseau, **caractérisé en ce que** ledit quatrième élément de réseau (5) fournit des services de contrôle et de sécurité aux sessions de communications établies dans le deuxième réseau.

9. Procédé selon l'une des revendications 6 à 8, dans lequel, suite à l'établissement de la session, on prévoit un contrôle des données envoyées au cours de ladite session, **caractérisé en ce que** ledit contrôle est exécuté par le premier organe de contrôle, vérifiant que seules les données correspondantes aux ressources autorisées entre le terminal (1) et le serveur (10) lors de l'étape d'établissement soient transmises dans le premier réseau.

10. Procédé selon l'une des revendications précédentes, dans lequel, suite à l'établissement de la session, on prévoit une étape de gestion de la session établie, **caractérisé en ce que** l'étape de gestion comprend les opérations suivantes :
- interruption momentanée de la session ;
- reprise de la session ;
- interruption définitive de la session.

11. Procédé selon la revendication 10, dans lequel l'étape d'interruption momentanée est exécutée par le terminal (1) avec l'envoi d'un message 'UPDATE - hold' selon un protocole de type SIP au serveur de données en flux continu (10).

12. Procédé selon l'une des revendications 10 et 11, dans lequel l'étape de reprise est exécutée par le terminal (1) avec l'envoi d'un message 'UPDATE - résume' selon un protocole de type SIP au serveur de données en flux continu (10).

13. Procédé selon l'une des revendications 10 à 12, dans lequel l'étape d'interruption définitive est exécutée par le terminal (1) avec l'envoi d'un message 'BYE' selon un protocole de type SIP au serveur de données en flux continu (10).

14. Procédé selon l'une des revendications précédentes, dans lequel le premier réseau est un réseau de télécommunication sans fil, tel qu'un réseau de Système Universel de Télécommunications avec les Mobiles.

15. Procédé selon l'une des revendications précédentes, dans lequel le premier réseau est un réseau de commutation de paquets.

16. Procédé selon l'une des revendications précédentes, dans lequel le deuxième réseau utilise un protocole Internet.

17. Procédé selon l'une quelconque des revendications précédentes, dans lequel le service de transmission de données est un service de transmission de données multimedia.

18. Système de gestion d'une session de transmission de données en flux continu d'un serveur de données en flux continu (10) vers au moins un terminal (1), selon un premier protocole et au travers d'un premier réseau auquel est connecté le terminal et un deuxième réseau auquel est connecté le serveur, l'un des premier et second réseau étant un réseau de télécommunication sans fil,
ledit système étant agencé pour établir une communication entre deux terminaux via lesdits premier et second réseaux, sur la base d'un second protocole de signalisation,
**caractérisé en ce que** lesdits premier et second protocoles sont identiques et qu'il comporte des moyens pour établir ladite session de transmission de données en flux continu selon ledit protocole entre le serveur de données et le terminal, avec une négociation de paramètres définissant des conditions de transmission desdites données en flux continu.

19. Système selon la revendication 18, **caractérisé en ce qu'**il comporte un module de contrôle des ressources du premier réseau, et **en ce que** ledit module de contrôle est agencé pour effectuer un calcul de ressources de transmission autorisées pour la session de transmission de données en flux continu, en cours d'établissement, sur la base de paramètres négociés entre le terminal et le serveur.

20. Système selon la revendication 19, dans lequel, pour établir ladite session :
a) le terminal (1) envoie au serveur (10) un message comportant des paramètres demandés pour les conditions de transmission des données en flux continu ;
b) le serveur (10) répond au terminal (1), via le module de contrôle, par un message comportant des paramètres négociés et définissant des conditions de transmission des données en flux continu, en fonction des paramètres demandés et des capacités du serveur ;
c) le terminal accepte des paramètres négociés en transmettant un message au serveur, via le module de contrôle ;
d) et le terminal échange des messages avec ledit module de contrôle pour réserver des ressources du premier réseau définissant au moins un débit de transmission desdites données en flux continu ;
avant le début de la transmission desdites données.

21. Système selon la revendication 20, dans lequel le module de contrôle comprend un premier organe de contrôle dans le premier réseau et un deuxième organe de contrôle dans le deuxième réseau,
**caractérisé en ce que** l'échange des messages entre le terminal et ledit module de contrôle (d) est exécutée sous le contrôle du deuxième organe via le premier organe,
et **en ce que** :
- le terminal envoie une requête de réservation de ressources pour réserver les ressources utiles pour la transmission dans le premier réseau ;
- ladite requête est transmise au premier organe de contrôle ;
- le premier organe de contrôle interroge le deuxième organe pour comparer les ressources autorisées et les ressources à réserver demandées par le terminal;
- sur la base de ladite comparaison, ladite requête est soumise à autorisation par le premier organe de contrôle.

22. Système selon la revendication 21, **caractérisé en ce qu'**il comporte :
- dans le premier réseau, un premier élément de réseau (2) utilisé au moins comme point d'accès pour le terminal et un deuxième élément de réseau (3) utilisé en tant que passerelle avec le deuxième réseau,
- dans le second réseau, un troisième élément de réseau (4) utilisé en tant que passerelle avec le premier réseau et relié au serveur (10),
**en ce que** le deuxième élément de réseau (3) comporte le premier organe de contrôle,
et **en ce que** le troisième élément de réseau (4) comporte le deuxième organe de contrôle.

23. Système selon la revendication 22, **caractérisé en ce qu'**il comporte en outre un quatrième élément de réseau, en tant que point d'accès pour le serveur dans ledit deuxième réseau, et **en ce que** ledit quatrième élément de réseau (5) fournit des services de contrôle et de sécurité aux sessions de communications établies dans le deuxième réseau.

24. Système selon l'une des revendications 21 à 23, **caractérisé en ce que**, suite à l'établissement de la session, le premier organe contrôle les données envoyées au cours de ladite session, en vérifiant que seules les données correspondantes aux ressources autorisées entre le terminal (1) et le serveur (10) pendant l'établissement de la session soient transmises dans le premier réseau.
